# EUROPEAN PATENT APPLICATION

(11) **EP 4 379 276 A1**
(43) Date of publication of application: **05.06.2024**
(21) Application number: 22862599.2
(22) Date of filing: 23.03.2022
(51) Int. Cl.: F24F 11/52, F24F 11/64

(54) **CONFIGURATION METHOD FOR AIR CONDITIONER, AIR CONDITIONER, AND READABLE STORAGE MEDIUM**

(30) Priority: 31.08.2021 CN 202111018966
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: FAN, Qifeng, Foshan, Guangdong 528311 (CN); SUN, Zhongbing, Foshan, Guangdong 528311 (CN)
(74) Representative: RGTH
(86) International application number: PCT/CN2022/082531
(87) International publication number: WO 2023/029452

(57) **Abstract**

Disclosed are a method for setting an air conditioner, an air conditioner and a computer readable storage medium. The method for setting the air conditioner includes: determining a target control parameter corresponding to a target object according to an air treatment module installed on the air conditioner and a custom setting operation, the air conditioner includes at least one installation position, the installation position is selectively installed with the air treatment module, and the target object includes a target function and/or a target mode; storing the target control parameter and the target object in association, and displaying a widget corresponding to the target object.

## Description

### CROSS-REFERENCE TO RELATED APPLICATIONS

The present application claims priority to Chinese Patent Application No. 202111018966.4, filed on August 31, 2021, the entire contents of which are incorporated herein by reference.

### TECHNICAL FIELD

The present application relates to the technical field of air conditioners, and in particular to a method for setting an air conditioner, an air conditioner and a computer readable storage medium.

### BACKGROUND

With the improvement of production levels, air conditioners have become a common household appliance in people's lives. Generally speaking, the structure and control program function of the air conditioner are solidified when it leaves the factory. Since users have different requirements for the functions and/or modes of air conditioners in different environments or different time periods; or different users may have different requirements for the functions and/or modes of air conditioners in the same time period or environment, therefore for an air conditioner to be universal, all functions and/or modes must be built in before leaving the factory. However, since there are so many functions and/or modes that can be composed of multiple parameters, the cost of the air conditioner will be high if all functions or modes are built into the air conditioner. Therefore, the related air conditioners have limitations.

It should be noted that the above content is only used to assist in understanding the technical problems solved by the present application, and does not represent an admission that the above content is prior art.

### SUMMARY

The main purpose of the present application is to provide a method for setting an air conditioner, an air conditioner and a computer readable storage medium, aiming to make the air conditioner applicable in general situations.

In order to achieve the above objective, the present application provides a method for setting an air conditioner, comprising:
determining a target control parameter corresponding to a target object according to an air treatment module installed on the air conditioner and a custom setting operation, the air conditioner comprises at least one installation position, the installation position is selectively installed with the air treatment module, and the target object comprises a target function and/or a target mode; and
storing the target control parameter and the target object in association, and displaying a widget corresponding to the target object.

In some embodiments, the determining the target control parameter corresponding to the target object according to the air treatment module installed on the air conditioner and the custom setting operation comprises:
displaying a parameter widget corresponding to the air treatment module installed on the air conditioner;
determining the target object according to the custom setting operation, and determining the target control parameter corresponding to the target object based on a control parameter set triggered by the parameter widget, the custom setting operation comprises setting the target object and setting the control parameter; or
determining the target control parameter corresponding to the composed target object based on the control parameter set triggered by the parameter widget, wherein the custom setting operation comprises setting the control parameter.

In some embodiments, the displaying the parameter widget corresponding to the air treatment module installed on the air conditioner comprises:
determining the target object according to the custom setting operation;
determining the parameter widget according to the target object and the air treatment module installed on the air conditioner; and
displaying the parameter widget.

In some embodiments, the determining the target control parameter corresponding to the target object according to the air treatment module installed on the air conditioner and the custom setting operation comprises:
obtaining a setting type, the setting type comprises at least one of a one-time setting and a persistent setting; and
determining the target control parameter corresponding to the target object of the setting type according to the air treatment module installed on the air conditioner and the custom setting operation.

In some embodiments, in response to the setting type being the persistent setting, the determining the target control parameter corresponding to the target object of the setting type according to the air treatment module installed on the air conditioner and the custom setting operation comprises:
determining a duration of the persistent setting; and
determining the target control parameter corresponding to the target object within the duration according to the air treatment module installed on the air conditioner and the custom setting operation.

In some embodiments, after the storing the target control parameter and the target object in association, and displaying the widget corresponding to the target object, the method further comprises:
in response to detecting a publishing operation, sending attribute information corresponding to the target object to a cloud.

In some embodiments, after the storing the target control parameter and the target object in association, and displaying the widget corresponding to the target object, the method further comprises:
in response to detecting the publishing operation, determining whether the target object matches the corresponding target control parameter;
in response to determining the target object matches the corresponding target control parameter, performing the sending the attribute information corresponding to the target object to the cloud; and
in response to determining the target object fails to match the corresponding target control parameter, requesting a verification.
In some embodiments, after the storing the target control parameter and the target object in association, and displaying the widget corresponding to the target object, the method further comprises:
receiving a start instruction of the target object, and controlling the air conditioner according to a target control parameter associated with the target object.

The present application further provides an air conditioner comprising a memory, a processor and an air conditioner setting program stored on the memory. When the air conditioner setting program is executed by the processor, steps of the above-mentioned method for setting the air conditioner are implemented.

The present application further provides a computer readable storage medium. An air conditioner setting program stored on the computer readable storage medium, when the air conditioner setting program is executed by a processor, steps of the above-mentioned method for setting the air conditioner are implemented.

A method for setting an air conditioner, an air conditioner and a computer readable storage medium are provided by the present application. The target air conditioner is provided with an installation position, and the installation position can be selectively installed with an air treatment module, so that the target air conditioner has the ability to support various functions and /or modes. Based on this, some functions and/or modes can be configured before leaving the factory, and during use, the target functions and/or target modes and target control parameters corresponding to the target functions and/or modes can be determined according to the air treatment module installed on the air conditioner and the custom setting operation. In addition, the target control parameter and the target object are stored in association, and a widget corresponding to the target object is displayed. That is to say, some functions and/or modes can be flexibly customized based on the user's needs, so that each air conditioner can meet the different needs of each user, making the air conditioner universal.

### BRIEF DESCRIPTION OF THE DRAWINGS

FIG. 1 is a schematic view of a hardware structure of a terminal device according to some embodiments of the present application.
FIG. 2 is a flow chart view of a method for setting an air conditioner according to a first embodiment of the present application.
FIG. 3 is a flow chart view of the method for setting the air conditioner according to a second embodiment of the present application.
FIG. 4 is a flow chart view of the method for setting the air conditioner according to a third embodiment of the present application.
FIG. 5 is a flow chart view of the method for setting the air conditioner according to a fourth embodiment of the present application.

The implementation of the purpose, functional characteristics and advantages of the present application will be further described with reference to the attached drawings and in combination with embodiments.

### DETAILED DESCRIPTION OF THE EMBODIMENTS

It should be understood that the specific embodiments described here are only used to explain the present application and are not used to limit the present application.

Since the functions and modes of the traditional air conditioner are solidified when it leaves the factory and only such functions and modes configured can be operated. While users have different requirements for the functions and/or modes of air conditioners in different environments or different time periods; or different users may have different requirements for the functions and/or modes of air conditioners in the same time period or environment, therefore for an air conditioner to be universal, all functions and/or modes must be built in before leaving the factory. However, since there are so infinite functions and/or modes, and the cost of the air conditioner will be high if all functions or modes are built into the air conditioner. Therefore, the related air conditioners have limitations.

Based on this, the present application provides a method for setting an air conditioner. The setting method provides a custom setting function. The user can customize the target function and/or mode based on the custom setting function, and set the target function to and/or mode as one of the functions and/or modes of the air conditioner on which the air conditioner may be operated. In this way, under different environments, in different time periods, or with different users, functions and/or modes can be arbitrarily customized according to their own needs to meet users' different needs for air conditioners in different environments and different time periods. However, in order to lower the production cost of the air conditioner, the air conditioner does not need to have all functions and/or modes built in before leaving the factory. Therefore, the method for setting the air conditioner in the present application makes the air conditioner universal.

In some embodiments, the method for setting the air conditioner is applied to an air conditioner. The indoor unit of the air conditioner is provided with an installation position, and the air treatment module is detachably installed in the installation position. That is to say, the air conditioner in these embodiments have different methods for setting the air conditioners, and the air treatment modules are detachably installed on the air conditioner. Different air treatment modules can realize different functions, and different air module combinations can realize different modes. In this way, the air conditioner in these embodiments have multiple functions or modes by setting different the parameters and different parameter values.

Based on this, the air conditioner in these embodiments has the ability to operate various functions and/or modes. When a new function and/or mode is set, on the basis of having an air treatment module corresponding to the function and/or mode, the air conditioner then can run the described functions and/or modes.

In order to better understand the above technical solutions, exemplary embodiments of the present application will be described in more detail below with reference to the accompanying drawings. Although exemplary embodiments of the present application are shown in the drawings, it should be understood that the present application may be implemented in various forms and should not be limited to the embodiments set forth herein. Rather, these embodiments are provided to provide a thorough understanding of the present application, and to fully convey the scope of the present application to those skilled in the art.

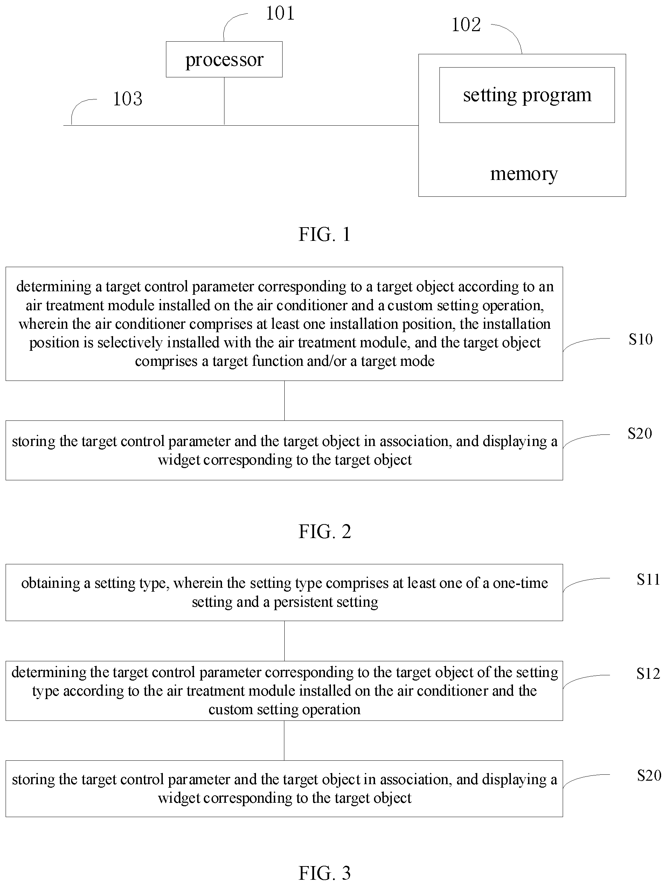

As an implementation manner, the hardware structure involved in the method for setting the air conditioner may be as shown in FIG. 1.

Specifically, the hardware structure involved in the method for setting the air conditioner may comprise a terminal. For example, the terminal is a mobile terminal, a terminal such as a central control device of the air conditioner with a display interface such as a large screen, or a display panel of the air conditioner. The above terminal is used to control the air conditioner. The hardware structure involved in the method for setting the air conditioner may also be an air conditioner having a processor and a display panel.

As an implementation manner, the terminal or air conditioner comprises: a processor 101 such as a CPU, a memory 102, and a communication bus 103. Among them, the communication bus 103 is configured to implement connection communication between these components. The processor 101 is configured to call an application program to perform a setting operation.

The memory 102 may be a high-speed RAM memory or a stable memory (nonvolatile memory), such as a disk memory.

It can be understood that, in some embodiments, the setting program that implements the function and/or mode setting process of the air conditioner is stored in the memory 102 of the terminal or the air conditioner, and the processor 101 calls the setting program in the memory 102, the following steps are performed:
determining a target control parameter corresponding to a target object according to an air treatment module installed on the air conditioner and a custom setting operation, the air conditioner comprises at least one installation position, the installation position is selectively installed with the air treatment module, and the target object comprises a target function and/or a target mode;
storing the target control parameter and the target object in association, and displaying a widget corresponding to the target object.

In some other embodiments, the setting program that implements the function and/or mode setting process of the air conditioner is stored in the computer readable storage medium, and when the computer readable storage medium is applied in a computer, the processor 101 of the computer calls the setting program in the storage medium to perform the above-mentioned steps.

Based on the above hardware structure of the air conditioner, the following embodiments of the present application are provided.

### First embodiment:

As shown in FIG. 2, the method for setting the air conditioner provided in these embodiments comprises the following steps:
510, determining a target control parameter corresponding to a target object according to an air treatment module installed on the air conditioner and a custom setting operation, the air conditioner comprises at least one installation position, the installation position is selectively installed with the air treatment module, and the target object comprises a target function and/or a target mode;
520, storing the target control parameter and the target object in association, and displaying a widget corresponding to the target object.

These embodiments are explained by taking an air conditioner or a mobile terminal communicated with the air conditioner as an example.

The air conditioner in these embodiment is a cabinet air conditioner. The indoor unit of the air conditioner is provided with at least one installation position. The installation position is used to selectively be installed with an air treatment module. In this way, the user can replace the air treatment module to switch between different functions and/or modes. Among them, the air treatment module comprises but is not limited to the following air treatment modules, such as purification module, humidification module, negative ion module, formaldehyde removal module, filtration module, odor removal module, disinfection and sterilization module, silent module, and oxygenation module. etc.

The air treatment modules are components used to implement various air treatment processes. One air treatment module can achieve at least one function, or at least two air treatment modules can implement one mode. If the purification module installed in the air conditioner is combined with the purification mode, the purification module achieves the purification function. For example, the purification module and the formaldehyde removal mode realize a new house mode, with this kind of combined control mode, the purification module and the formaldehyde removal mode realize corresponding adjustments to the new house mode when running.

It should be noted that the modes comprise but are not limited to new house mode, furniture mode, new decoration mode, pregnant or confinement mode, pet mode, special period mode, three generations living under one roof, etc.

It can be seen that, based on the fact that the air treatment module is detachable at the installation position, the air conditioner of these embodiments can realize multiple functions or modes by arranging the air treatment module or combining the air treatment modules. Therefore, the air conditioner has the ability to perform multiple functions or modes.

To lower cost, the air conditioner is limited in functions and/or modes and is generally provided with conventional cooling modes, heating modes, and dehumidification functions. Different users have different requirements for functions and/or modes. If each air conditioner has the same functions and/or modes, which not only makes the air conditioner uncapable to meet the needs of all users, but also results in some functions and/or modes are worthless for some users or in some environments, thereby making a waste of some functions.

Based on the fact that the air conditioner in these embodiment has the ability to perform multiple functions and/or modes, in these embodiments, with such advantages, there provides an air conditioner that can arbitrarily set and add functions or modes according to the user's current environment and current needs, allowing the air conditioner to have customized functions and/or modes. Compared with all air conditioners having the same built-in functions and/or modes, the air conditioner in these embodiments is more flexible, not only meeting the needs of different users in different situations, but also increasing the use value of the functions and/or modes, making the air conditioners have universality.

In some embodiments, the air conditioner has a function and/or mode customization setting function. When the user triggers the custom setting function, the installed air treatment module of the air conditioner is determined, and then the parameters that the air conditioner can currently support are determined based on the installed air treatment module. Then combined with the custom setting operation, the customized target object and the target control parameters of the target object can be determined. After associating the target object with the target control parameter, the target object is generated, and then the widget corresponding to the target object is displayed on the display interface. In this way, the user can trigger the widget of the target object on the display interface to make the air conditioner run the target object. It can be understood that the target object comprises target functions and/or target modes.

Since the target object is associated with a target control parameter, the processor of the air conditioner can call the target control parameter of the target object when running the target object based on the association between the target object and the target control parameter.

It can be understood that after the target object is generated, the corresponding target firmware is determined based on the type of the target object, and then the target firmware is used to execute the target control parameters. In some embodiments, the firmware corresponding to each function and/or mode is stored inside the air conditioner, and the target firmware can be determined among the firmware. Alternatively, after generating the target object, the target firmware can be download from the cloud according to the target control parameters of the target object, or the target firmware can automatically generated based on basic firmware combined with the target control parameters. In this way, the custom functions and/or modes can be performed in the air conditioner.

It can be understood that the method of determining the target object and the target control parameters of the target object according to the installed air treatment module of the air conditioner and the custom setting operation comprises but is not limited to the following embodiments:

In some embodiments of the present application, the step of determining the target control parameter corresponding to the target object according to the air treatment module installed on the air conditioner and the custom setting operation further comprises:
displaying a parameter widget corresponding to the air treatment module installed on the air conditioner;
determining the target object according to the custom setting operation, and determining the target control parameter corresponding to the target object based on a control parameter set by triggering the parameter widget, the custom setting operation comprises setting the target object and setting the control parameter;

That is to say, in these embodiments, when the custom setting function of the air conditioner is triggered, the installed air treatment module of the air conditioner is determined, and then only the parameter widget corresponding to the installed air treatment module is displayed on the parameter setting interface of the display interface. The control parameters set by the user on the parameter setting interface are all control parameters supported by the hardware module of the air conditioner. In this way, by combining the custom setting of the target object and the control parameters set in the parameter setting interface, the target object and the target control parameters corresponding to the target object are determined. Then the custom settings of the target object and the target control parameter are associated.

In some embodiments, the target control parameters in these embodiment comprise parameter types and parameter values. When the parameter widget is triggered, the parameter type is determined based on the parameter widget, and the parameter value is determined based on the number input when the parameter widget is triggered.

In some embodiments, there is at least one parameter widget provided. The user can choose to set one control parameter (function) as the target control parameter, or can choose to set a combination of multiple identical control parameters (functions), or set a combination of multiple different control parameters (modes) as the target control parameter.

In some embodiments, the target object and target control parameters are all customized, so the customized settings comprise setting the target object and the target control parameters.

In these embodiments, the target control parameter is determined based on the parameter controls supported by the air treatment module installed in the air conditioner, so that the custom-set target object can be supported by the hardware of the air conditioner. In this way, the air conditioner can run the target object smoothly, thereby providing convenience for users to customize settings.

In some embodiments of the present application, the step of determining the target control parameter corresponding to the target object according to the air treatment module installed on the air conditioner and the custom setting operation further comprises:
displaying a parameter widget corresponding to the air treatment module installed on the air conditioner;
determining the target control parameter corresponding to the composed target object based on the control parameter set by triggering the parameter widget, the custom setting operation comprises setting the control parameter.

That is, in these embodiments, when the custom setting function of the air conditioner is triggered, the installed air treatment module of the air conditioner is determined, and then only the parameter widget corresponding to the installed air treatment module is displayed on the parameter setting interface of the display interface. The control parameters set by the user on the parameter setting interface are all control parameters supported by the hardware module of the air conditioner.

In some embodiments, the target object is not a custom-set target object. In these embodiments, after the user triggers the control parameter based on the parameter widget, the target object is determined according to the combination of the control parameters. If the control parameter comprises humidity, the corresponding determined target object is the humidification function. Or when the control parameters comprise humidity and purification, the corresponding determined target object is the refreshing mode, etc. In some embodiments, the target control parameter is also set based on the parameter widget on the parameter setting interface. Therefore, in these embodiments, the target object and the target control parameters of the target object are determined based on the control parameter setting triggered by the parameter widget.

In some embodiments, the custom settings described in these embodiments comprise control parameter settings. Based on the control parameter settings, the setting of the target object and the setting of the target control parameters can be completed. Compared with the above embodiments, in these embodiments, it is no need to set the target object, the target object is automatically determined, thereby reducing custom setting steps, and providing convenience for users.

In some embodiments, the target control parameter in these embodiment comprises the parameter type and the parameter value. When the parameter widget is triggered, the parameter type is determined based on the parameter widget, and the parameter value is determined based on the number input when the parameter widget is triggered.

In some embodiments, there is at least one parameter widget provided. The user can choose to set one control parameter (function) as the target control parameter, or can choose to set a combination of multiple identical control parameters (functions), or set a combination of multiple different control parameters (modes) as the target control parameter.

In these embodiments, the target control parameter is determined based on the parameter controls supported by the air treatment module installed in the air conditioner, so that the custom-set target object can be supported by the hardware of the air conditioner. In this way, the air conditioner can run the target object smoothly, thereby providing convenience for users to customize settings.

In some embodiments, the step of displaying the parameter widget corresponding to the air treatment module installed on the air conditioner comprises:
determining the target object according to the custom setting operation;
determining the parameter widget according to the target object and the air treatment module installed on the air conditioner;
displaying the parameter widget.

In some embodiments, the target object is determined according to the custom setting operation, and then the first parameter or the first parameter combination corresponding to the target object is determined based on the target object. According to the second parameter or the second parameter combination supported by the installed air treatment module of the air conditioner, the target parameter is determined from the first parameter or the first parameter combination, and the second parameter or the second parameter combination, then the parameter widget corresponding to the target parameter is determined, and the parameter widget is displayed. The custom setting operation comprises setting the target object and setting the control parameter.

In some embodiments, the target object is determined based on a custom setting operation. The parameter widget displayed in these embodiment are determined based on the parameters corresponding to the target object and the air treatment module installed in the air conditioner after the user defines the target object. For example, the first parameter is determined according to the target object, then the second parameter corresponding to the air treatment module installed in the air conditioner is determined from the first parameter, and then the parameter widget of the second parameter is displayed on the display interface. If the target object is air purification, the corresponding first parameters comprise dust removal, filtration, etc., and correspondingly the air conditioner is installed with a filter as the air treatment module, then the parameter widget of the filter are displayed, and finally the user sets the corresponding target control parameters for air purification based on the parameter widget of the filter.

In these embodiments, the target control parameter is determined based on the parameter widget supported by the air treatment module installed in the air conditioner, so that the custom-set target object can be supported by the hardware of the air conditioner. In this way, the air conditioner can run the target object smoothly, thereby providing convenience for users to customize settings.

In some embodiments, after the target object and the target control parameters of the target object are stored in association, the air conditioner can automatically switch to the target object and operate the target object according to the target control parameters. Alternatively, only the target object is kept and is activated when the user uses it.

In these embodiments, the target air conditioner is provided with an installation position, and the installation position can be selectively installed with an air treatment module, so that the target air conditioner has the ability to support various functions and /or modes. Based on this, some functions and/or modes can be configured before leaving the factory, and during use, the target functions and/or target modes and target control parameters corresponding to the target functions and/or modes can be determined according to the air treatment module installed on the air conditioner and the custom setting operation. In addition, the target control parameter and the target object are stored in association, and a widget corresponding to the target object is displayed. That is to say, some functions and/or modes can be flexibly customized based on the user's needs, so that each air conditioner can meet the different needs of each user, making the air conditioner universal.

### Second embodiment:

As shown in FIG. 3, based on the above-mentioned first embodiment, in these embodiments, the step of determining the target control parameter corresponding to the target object according to the air treatment module installed on the air conditioner and the custom setting operation comprises:
511, obtaining a setting type, the setting type comprises at least one of a one-time setting and a persistent setting;
S12, determining the target control parameter corresponding to the target object of the setting type according to the air treatment module installed on the air conditioner and the custom setting operation.

It should be noted that since the function and/or mode may only be suitable for the current operation or within a period of time, after the optimal period, the operation effect of the function and/or mode will become worse. At this time, the user can customize other functions and/or modules. However, in the long run, there will be more and more functions and/or modes in the air conditioner, which will occupy a large amount of memory, thus causing the air conditioner to slow down. Based on this, in these embodiments, by setting the type of functions and/or modes, the custom-set functions and/or modes can be run once or continuously. If the function and/or mode is run once, the function and/or mode will be deleted after the operation is completed. If the function and/or mode is running continuously, the function and/or mode will be deleted after the running duration. During the duration, starting or stopping the function and/or mode will not delete the function and/or mode.

In some embodiments, the setting type also comprises permanent settings. If permanent settings are selected, the functions and/or modes will always be maintained in the air conditioner and will not be deleted (unless deleted manually by the user).

In some embodiments, the setting type is a one-time setting, that is, the control is completed at one time. Under this setting type, the user only needs to set a set of target control parameters.

When the setting type is persistent setting, it means continuous control within a period of time, and parameter control needs to be performed within this period of time. Under this setting type, the user can set at least one set of target control parameters. For example, at different time points or each time it is started, the corresponding target control parameters are different.

In some embodiments, in response to the setting type being the persistent setting, the operation of determining the target control parameter corresponding to the target object of the setting type according to the air treatment module installed on the air conditioner and the custom setting operation comprises:
determining a duration of the persistent setting;
determining the target control parameter corresponding to the target object within the duration according to the air treatment module installed on the air conditioner and the custom setting operation.

When the user customizes the setting process and selects persistence setting as the setting type, the display interface displays the duration input widget. The user inputs the duration on the input widget, and then the duration is defined as the duration of the target object.

The user sets the duration according to needs, each preset time interval corresponds to at least one target control parameter, and then the target control parameters of each time period are associated based on the sequence of the preset time intervals. When running the target object, the target control parameters of each time period are determined according to the preset time interval, and then the operation of the air conditioner is controlled based on the target control parameters. In this way, based on the multiple associated target control parameters within the duration, the target control parameters change with time in the custom-set target object, making the customized functions and/or modes of the air conditioner intelligent.

### Third embodiment:

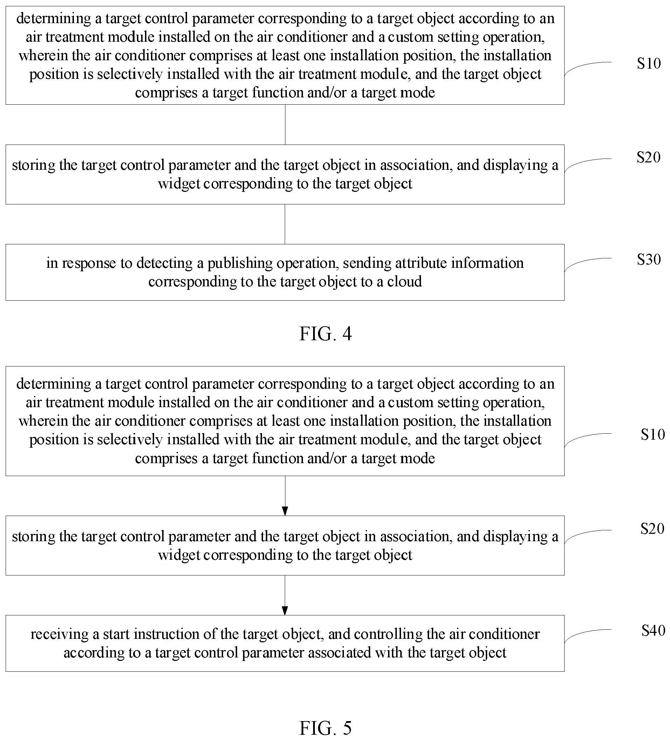

As shown in FIG. 4, based on the above-mentioned embodiment, after the step of storing the target control parameter and the target object in association, and displaying the widget corresponding to the target object, the method further comprises:
S30, in response to detecting a publishing operation, sending attribute information corresponding to the target object to a cloud.

In these embodiments, after associating and saving the target object and the target control parameters, the user can also publish the attribute information of the target object to the cloud operation system for other users to subscribe to the target object. The attribute information of the target object comprises a software package that implements the target object. Based on the attribute information, the user can obtain the target object and the target control parameters of the target object.

In some embodiments, the air conditioner or mobile terminal is provided with a publishing widget. When the user triggers a publishing operation based on the publishing widget, the attribute information of the target object is published to the cloud.

All target air conditioners communicated with the cloud can send the subscription information of the target object to the cloud, and then share the attribute information of the target object with other air conditioners.

In some embodiments, after the step of storing the target control parameter and the target object in association, and displaying the widget corresponding to the target object, the method further comprises:
in response to detecting the publishing operation, determining whether the target object matches the corresponding target control parameter;
in response to determining the target object matches the corresponding target control parameter, performing the step of sending the attribute information corresponding to the target object to the cloud;
in response to determining the target object fails to match the corresponding target control parameter, requesting a verification.

Since the target object and target control parameters are user-defined, there may be conflicts or mismatches between the identification of the target object and the user-defined control parameters. If the target object is the dust removal function and the target control parameter is humidity, the target object and the target control parameter do not match. If the target object is published to the cloud, it is easy to mislead other users.

Based on this, in these embodiments, when the user triggers the publishing operation, the air conditioner or mobile terminal will first identify whether the target object matches the corresponding target control parameter. If they match, the attribute information of the target object will be sent to cloud. If it does not match, it will be submitted for manual approval. After the manual approval is passed, it will be sent to the cloud. If the manual approval does not pass, a prompt message indicating that the publication failed will be output.

In these embodiments, it realizes sharing the attribute information of the target object to other users, and users subscribe to the target object through the cloud, while saving the user's custom setting process and providing convenience for users. In particular, users nearby the air conditioner have the same needs for the air conditioner because they are in the same environment. Therefore, these embodiments provide convenience to the users.

### Fourth embodiment:

As shown in FIG. 5, based on the above-mentioned embodiments, in some embodiments, after the step of storing the target control parameter and the target object in association, and displaying the widget corresponding to the target object, the method further comprises:
S40, in response to receiving a start instruction of the target object, controlling the air conditioner according to a target control parameter associated with the target object.

After the target object is customized, the target object is displayed on the display interface. The user can trigger the starting instruction of the target object based on the display interface, or can trigger the start instruction of the target object through voice control or gesture control. After receiving the start instruction of the target object, the air conditioner calls the target control parameters associated with the target object, and then controls the operation of the air conditioner according to the target control parameters, so that the air conditioner operates the target object to adjust the indoor environment temperature.

In these embodiments, the air conditioner can control the air conditioner based on the target control parameters associated with the target object to realize customized setting and addition of the target object.

In some embodiments, an implementation way for setting up the air conditioners is provided based on the above embodiments.

The user turns on the custom setting function;

The user defines the name of the function and/or mode and selects the type of setting; Whether the function and/or mode described is a one-time setting or a persistent setting? If it is a one-time setting, one or more control parameter combinations is selected and the value of each control parameter is set to complete the function and/or mode and the control parameter setting of the function and/or mode. If it is a persistent setting, a time period T is set; within T, at each interval G, one or more control parameter combinations is selected, and the value of each control parameter is set to complete the functions and/or modes and the control parameter settings of the function and/or mode.
the function and/or mode is saved and published, and the function and/or mode trigger widget will appear on the air conditioner/large screen/wired controller/APP.

The user can use this function and/or mode on the air conditioner.

If the user determines to publish the function and/or mode, it will be published to the software function application market.

In some embodiments, the present application further provides a computer program product, the computer program product comprises air conditioner setting program codes, and when the setting program codes are executed by a processor, the various embodiments of the above adjustments are implemented.

It should be noted that the above are only some embodiments of the present application, and do not limit the patent scope of the present application. Under the inventive concept of the present application, equivalent structural transformations made by using the contents of the description and drawings of the present application, or direct/indirect application in other related technical fields are comprised in the patent protection scope of the present application.

## Claims

1. A method for setting an air conditioner, **characterized by** comprising:
determining a target control parameter corresponding to a target object according to an air treatment module installed on the air conditioner and a custom setting operation, wherein the air conditioner comprises at least an installation position, the installation position is selectively installed with the air treatment module, and the target object comprises a target function and/or a target mode; and
storing the target control parameter and the target object in association, and displaying a widget corresponding to the target object.

2. The method for setting the air conditioner according to claim 1, wherein the determining the target control parameter corresponding to the target object according to the air treatment module installed on the air conditioner and the custom setting operation comprises:
displaying a parameter widget corresponding to the air treatment module installed on the air conditioner;
determining the target object according to the custom setting operation, and determining the target control parameter corresponding to the target object based on a control parameter set triggered by the parameter widget, wherein the custom setting operation comprises setting the target object and setting a control parameter; or
determining the target control parameter corresponding to the composed target object based on the control parameter set triggered by the parameter widget, wherein the custom setting operation comprises setting the control parameter.

3. The method for setting the air conditioner according to claim 2, wherein the displaying the parameter widget corresponding to the air treatment module installed on the air conditioner comprises:
determining the target object according to the custom setting operation;
determining the parameter widget according to the target object and the air treatment module installed on the air conditioner; and
displaying the parameter widget.

4. The method for setting the air conditioner according to claim 1, wherein the determining the target control parameter corresponding to the target object according to the air treatment module installed on the air conditioner and the custom setting operation comprises:
obtaining a setting type, wherein the setting type comprises at least one of a one-time setting and a persistent setting; and
determining the target control parameter corresponding to a target object of the setting type according to the air treatment module installed on the air conditioner and the custom setting operation.

5. The method for setting the air conditioner according to claim 4, wherein in response to the setting type being the persistent setting, the determining the target control parameter corresponding to the target object of the setting type according to the air treatment module installed on the air conditioner and the custom setting operation comprises:
determining a duration of the persistent setting; and
determining the target control parameter corresponding to the target object within the duration according to the air treatment module installed on the air conditioner and the custom setting operation.

6. The method for setting the air conditioner according to claim 1, wherein after the storing the target control parameter and the target object in association, and displaying the widget corresponding to the target object, the method further comprises:
in response to detecting a publishing operation, sending attribute information corresponding to the target object to a cloud.

7. The method for setting the air conditioner according to claim 6, wherein after the storing the target control parameter and the target object in association, and displaying the widget corresponding to the target object, the method further comprises:
in response to detecting the publishing operation, determining whether the target object matches the corresponding target control parameter;
in response to determining the target object matches the corresponding target control parameter, performing the sending the attribute information corresponding to the target object to the cloud; and
in response to determining the target object fails to match the corresponding target control parameter, requesting a verification.

8. The method for setting the air conditioner according to claim 1, wherein after the storing the target control parameter and the target object in association, and displaying the widget corresponding to the target object, the method further comprises:
receiving a start instruction of the target object, and controlling the air conditioner according to a target control parameter associated with the target object.

9. An air conditioner, **characterized by** comprising a memory, a processor and an air conditioner setting program stored in the memory and executed on the processor, wherein when the air conditioner setting program is executed by the processor, a step of a method for setting the air conditioner of any one of claims 1 to 8 are implemented

10. A computer readable storage medium, wherein an air conditioner setting program is stored on the computer readable storage medium, and when the air conditioner setting program is executed by a processor, a step of a method for setting an air conditioner of any one of claims 1 to 8 are implemented.
